(19) Europäisches Patentamt
European Patent Office
Office européen des brevets

(11) **EP 3 904 844 A1**

(12) **EUROPEAN PATENT APPLICATION**

(43) Date of publication:
**03.11.2021 Bulletin 2021/44**

(51) Int Cl.:
**G01H 1/00** *(2006.01)*          **G01H 11/02** *(2006.01)*
**G01M 15/12** *(2006.01)*          **G01H 3/08** *(2006.01)*

(21) Application number: **20190156.8**

(22) Date of filing: **07.08.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2020  PT 2020116300**

(71) Applicant: **International Iberian Nanotechnology
Laboratory
4715-330 Braga (PT)**

(72) Inventors:
• **DE MATOS ANTUNES FERREIRA, RICARDO
ALEXANDRE**
**4715-181 BRAGA (PT)**
• **BÖHNERT, TIM**
**4715-315 BRAGA (PT)**
• **PAZ PÉREZ DE COLOSÍA, ELVIRA**
**4715-042 BRAGA (PT)**

(74) Representative: **Patentree
Edificio Net
Rua de Salazares, 842
4149-002 Porto (PT)**

(54) **METHOD AND SYSTEM FOR NON-INVASIVE VIBRATION-BASED CONDITION MONITORING
OF A MACHINE**

(57)    The present disclosure relates to a method and a device for non-invasive vibration-based condition monitoring of a machine placed on a physical frame of reference, using a time-domain broadband magnetoresistive sensor having a sensor transfer function of electric resistance versus magnetic field intensity, said machine comprising an attached magnet or a magnetic part; comprising the steps of: placing the magnetic sensor on said physical frame of reference at a distance from the machine and at a predetermined distance from the magnet or magnetic part, such that the magnetoresistive sensor is operating in a dynamic part of the sensor transfer function in respect of the magnetic field produced by the magnet or a magnetic part; and capturing a time-domain magnetic field signal transduced by the sensor; using an electronic data processor to process the captured signal to obtain a vibration-based indicator of the machine's condition.

Fig. 2

## Description

### TECHNICAL FIELD

The present disclosure relates to a method and a device for non-invasive condition monitoring of machines, in particular of a machine placed on a physical frame of reference, using a time-domain broadband magnetoresistive sensor having a sensor transfer function of electric resistance versus magnetic field intensity.

### BACKGROUND

Predictive maintenance involves analysing data from condition monitoring of machines. Deviation from baseline data pattern emerges when a machine part starts deteriorating. Analysing data from condition monitoring allows users to schedule predictive maintenance and avoid emergency downtime from machine failure.

Conventional condition monitoring techniques include: oil analysis, vibration analysis, motor circuit analysis, ultrasonic monitoring, acoustic analysis, radiation analysis, laser interferometry, electrical monitoring, electromagnetic measurement, performance monitoring, etc.

Condition monitoring involving electromagnetic measurement typically involves measuring distortions in magnetic field as well as changes in eddy field current in order to identify defects or deterioration in machine and machine parts. Examples of techniques of electromagnetic measurement are magnetic particle inspection, magnetic flux leakage, pulsed eddy currents, remote and near field eddy current.

Condition monitoring involving vibration analysis utilizes changes in vibration to identify machine and machine parts deterioration. Misalignments, imbalances, wear and tear on machine parts often causes these machine parts to vibrate differently from their usual baseline vibration patterns. Examples of techniques of vibration analysis include broadband vibration analysis, time waveform analysis and spectrogram analysis.

However, current conditional monitoring methods and devices are often expensive, unsafe, delicate, requires precise alignment, requires highly skilled operators to perform, requires exposing the internal parts of the machine in order to install the monitoring device and, may be unreliable in dusty and dirty environments.

Monitoring the condition of existing machines requires some level of knowledge of the machine details and functional principles, such as where are the critical moving parts located, how can they be accessed, where can foreign sensors be installed safely, how to safely install the extra cables required by wired sensors, etc. As a consequence, different machines end up being monitored by different sets of sensors, placed in different numbers in order to monitor the different types of machine parts.

As such, there is a need for a more sensitive but still cheaper, simpler and non-invasive method for condition monitoring of machines that can be applied more universally, i.e., regardless of the nature of the machine.

Document EP 3273203 A1 discloses a displacement detection device which can determine displacement of a detection target. The displacement detection device includes a magnet which is displaced in a displacement direction Ds, is rod-shaped and has a form in which a longitudinal direction and the displacement direction Ds form a predetermined angle, and a sensor IC which detects a magnetic flux density of a magnetic field formed by the magnet in an x direction and a z direction orthogonal to the displacement direction Ds and outputs a signal proportional to the magnetic field detected.

Document US 2019219421 A1 discloses a displacement sensor comprising a magnetic field source generating a magnetic field and a magnetic field sensor arrangement adapted to contactlessly detect a relative position of the magnetic field source with respect to the magnetic field sensor arrangement. The magnetic field sensor arrangement includes a first magnetic field sensor adapted to generate a first position signal and a second magnetic field sensor adapted to generate a second position signal. Each of the first magnetic field sensor and the second magnetic field sensor has a magnetic field probe adapted to detect a magnetic flux density of the magnetic field, an evaluation unit for evaluating an output signal of the magnetic field probe, and a communication interface for emitting and receiving a plurality of communication signals. The first magnetic field sensor and the second magnetic field sensor are connected to each other via a data bus for transmitting the communication signals.

Document US 6208133 B1 discloses a method and apparatus for calibrating the output signal of a linear position detector without accessing the interior of the detector housing. A magnet is selectively movable toward and away from the exterior of the electronics housing, and a sensor is provided within the housing for sensing the presence of the magnet. The linear position detector is calibrated by setting a movable marker at the desired position and pushing the magnet toward the housing. The sensor then detects the presence of the magnet, and a processor saves the position of the marker as a reference point. All future positions of the marker can then be scaled based upon the reference point. Thus, the linear position detector can be calibrated without the need for opening the electronics housing and potentially exposing the electronics components to moisture, contaminants, and/or static electricity.

These facts are disclosed in order to illustrate the technical problem addressed by the present disclosure.

### GENERAL DESCRIPTION

The present disclosure relates to a method and a device for non-invasive condition monitoring of machines.

Current conditional monitoring methods and devices are often expensive, unsafe, delicate, requires precise alignment, requires highly skilled operators to perform, requires exposing the internal parts of the machine in order to install the monitoring device and, may be unreliable in dusty and dirty environments.

Monitoring the condition of existing machines requires some level of knowledge of the machine details and functional principles, such as where are the critical moving parts located, how can they be accessed, where can foreign sensors be installed safely, how to safely install the extra cables required by wired sensors, etc. As a consequence, different machines end up being monitored by different sets of sensors, placed in different numbers in order to monitor the different types of machine parts.

As such, there is a need for a cheaper, simpler and non-invasive method for condition monitoring of machines that can be applied more universally, i.e., regardless of the nature of the machine.

The present disclosure relates to a method and a device for non-invasive monitoring of machine that is cheaper, simpler and does not require installing wires on/in the machine, or opening up the machine to expose the internal moving parts. Therefore, the method described in the present disclosure is able to monitor any machine with internal moving parts, regardless of the nature of the machine.

In an embodiment, the method and the device described in the present disclosure characterizes the operational status of a machine and the moving parts in the machine.

In an embodiment, the method and the device described in the present disclosure measures displacements in the machine frame without the need for installing wires or accessing the interior of the machine.

In embodiment, the method and the device described in the present disclosure measures displacements that can occur over a wide bandwidth of frequencies (DC 10MHz).

In embodiment, the method and the device described in the present disclosure measures displacements caused by mechanical motion of the machine and the moving parts in the machine.

In an embodiment, a magnet is placed on the machine frame. This magnet serves two purposes: it acts as a transducer of mechanical motion and it amplifies the effect of such motions by creating a large magnetic field that can be detected by a magnetic field sensor with a sensitivity large enough to detect magnetic field variations associated with displacements of at least nanometre in range.

In an embodiment, the present disclosure relates to a method for non-invasive (i.e. without having to access the internal parts of the machine) vibration-based condition monitoring of a machine placed on a physical frame of reference, using a time-domain broadband magnetoresistive sensor having a sensor transfer function of electric resistance versus magnetic field intensity, said machine comprising an attached magnet or a magnetic part (i.e. a part of the machine);
comprising the steps of:

placing the magnetic sensor on said physical frame of reference at a distance from the machine and at a predetermined distance from the magnet or magnetic part, such that the magnetoresistive sensor is operating in a dynamic part of the sensor transfer function in respect of the magnetic field produced by the magnet or a magnetic part; and
capturing a time-domain magnetic field signal transduced by the sensor;
using an electronic data processor to process the captured signal to obtain a vibration-based indicator of the machine's condition.

In an embodiment, the broadband magnetoresistive sensor has a broadband response that includes 0 Hz or a DC component, in particular the broadband magnetoresistive sensor has a broadband response that includes 0 Hz to 1 KHz, or 0 Hz to 100 KHz, or 0 Hz to 1 MHz, or 0 Hz to 1 GHz.

In an embodiment, the method for non-invasive condition monitoring of a machine comprises the preceding step of attaching the magnet on an exterior surface of the machine.

In an embodiment, the magnet has been previously attached to an internal part of the machine.

In an embodiment, the method for non-invasive condition monitoring of a machine is for monitoring a specific part of said machine, wherein the internal part of the machine is the specific part to be monitored.

In an embodiment, the magnetoresistive sensor is operating in a linear part of the sensor transfer function in respect of the magnetic field produced by the magnet or a magnetic part.

In an embodiment, the magnetoresistive sensor is: a magnetic tunnel junction, MTJ, sensor; a tunnel magnetoresistance, TMR, sensor; a giant magnetoresistance, GMR, sensor; or an anisotropic magnetoresistive, AMR, sensor.

In an embodiment, the predetermined distance and the MTJ sensor are arranged such that the MTJ sensor is being operated within a linear response portion of the MTJ sensor input-output function.

In an embodiment, the sensor is arranged such that the linear response portion of the sensor has a detection limit of displacement of the magnet or the magnetic part of not more than 15 nm of vibration of the magnet or magnetic part, in particular not more than 10 nm, further in particular not more than 1 nm.

In an embodiment, the magnet is a neodymium magnet or an electromagnet.

In an embodiment, the magnet is a compound magnet comprising an assembly of a plurality of magnets for increasing the gradient of the produced magnetic field.

In an embodiment, the physical frame of reference is fixed relative to the ground.

In an embodiment, the magnetic sensor is placed on a vibration-dampening or mechanically-decoupled stand which is placed on said physical frame of reference.

In an embodiment, the present disclosure relates to a system for non-invasive vibration-based condition monitoring of a machine placed on a physical frame of reference, said machine comprising an attached magnet or a magnetic part, the system comprising:

a time-domain wideband magnetoresistive sensor having a sensor transfer function of electric resistance versus magnetic field intensity, said machine comprising an attached magnet or a magnetic part, for placing on said physical frame of reference at a distance from the machine and at a reference distance from the magnet or magnetic part, wherein the magnetoresistive sensor is operating in a dynamic part of the sensor transfer function in respect of the magnetic field produced by the magnet or a magnetic part; and
an electronic data processor configured for:

capturing a time-domain magnetic field signal transduced by the sensor; and
processing the captured signal to obtain a vibration-based indicator of the machine's condition.

In an embodiment, the wideband of the system comprises 0 Hz or a DC component, in particular the broadband magnetoresistive sensor has a broadband response that includes 0 Hz to 1 KHz, or 0 Hz to 100 KHz, or 0 Hz to 1 MHz, or 0 Hz to 1 GHz.

In an embodiment, the magnetoresistive sensor of the system is: a magnetic tunnel junction, MTJ, sensor; a tunnel magnetoresistance, TMR, sensor; a giant magnetoresistance, GMR, sensor; or an anisotropic magnetoresistive, AMR, sensor.

In an embodiment, the electronic data processor of the system is configured for processing the captured signal which is obtained when the MTJ sensor operates within a linear response portion of the MTJ sensor input-output function.

In an embodiment, the linear response portion of the sensor in the system has a detection limit of not more than 15 nm of vibration of the magnet or magnetic part, in particular not more than 10 nm, further in particular not more than 1 nm.

In an embodiment, the magnet in the system is a neodymium magnet or an electromagnet or a compound magnet comprising an assembly of a plurality of magnets arranged for increasing the gradient of the produced magnetic field.

In an embodiment, the physical frame of reference of the system is a ground.

In an embodiment, the system for non-invasive condition monitoring of a machine comprises the magnet, thus not requiring the use of the magnetic part.

In an embodiment, the present disclosure relates to use of a time-domain wideband magnetoresistive sensor having a sensor transfer function of electric resistance versus magnetic field intensity, for non-invasive vibration-based condition monitoring of a machine placed on a physical frame of reference, said machine comprising an attached magnet or a magnetic part, said use comprising:

placing the magnetic sensor on said physical frame of reference at a distance from the machine and at a predetermined distance from the magnet or magnetic part, such that the magnetoresistive sensor is operating in a dynamic part of the sensor transfer function in respect of the magnetic field produced by the magnet or a magnetic part; and
capturing a time-domain magnetic field signal transduced by the sensor;
using an electronic data processor to process the captured signal to obtain a vibration-based indicator of the machine's condition.

In an embodiment, the magnetoresistive sensor in the use of a domain wideband magnetoresistive sensor is: a magnetic tunnel junction, MTJ, sensor; a tunnel magnetoresistance, TMR, sensor; a giant magnetoresistance, GMR, sensor; or an anisotropic magnetoresistive, AMR, sensor.

A dynamic part of a sensor transfer function is a part of the transfer function that is strictly monotonic, i.e. where an increment in the magnetic field being measured results in an increment in the magnetoresistive sensor output resistance. In practice, the sensor will be operating as close as possible to the magnet or magnetic part, without saturating the sensor. Advantageously, this can be achieved in an easier manner by using a relatively weaker magnet and a more sensitive sensor (like the magnetoresistive sensors described herein, in particular a magnetic tunnel junction, MTJ, sensor).

The captured magnetic field signal transduced by the sensor is a time-domain signal, thus including non-periodic data, i.e. transient data, which is advantageous for obtaining information relevant for monitoring vibration-based conditions from the machine being monitored.

In particular, the broadband magnetoresistive sensor has a broadband response that includes 0 Hz to 1 KHz, or 0 Hz to 100 KHz, or 0 Hz to 1 MHz, or 0 Hz to 1 GHz.

In particular, the magnet can be attached to an internal frame of the machine.

A compound magnet comprises an assembly of a plurality of magnets is able to increase the gradient of the produced magnetic field in specific spatial regions while keeping the magnetic field value below the saturation field of the sensor. Thus, increasing the signal gradient on the dynamic part of the sensor transfer function in respect of the magnetic field produced by the compound magnet.

## BRIEF DESCRIPTION OF THE DRAWINGS

The following figures provide preferred embodiments for illustrating the disclosure and should not be seen as limiting the scope of invention.

Figure 1 is a schematic illustration of a setup describing the conventional method to monitor moving parts inside a machine.

Figure 2 is a schematic illustration of a setup according to an embodiment of the disclosure for non-invasive monitoring of a machine.

Figure 3 shows an example of a time-domain signal obtained from a test machine using the sensor according to an embodiment of the disclosure during three time periods (all machinery off, main machine part on and pump off, main machine part off and pump on).

Figure 4 shows an example of a time-domain signal obtained from a test machine using the sensor according to an embodiment of the disclosure during machine start up.

Figure 5 is an example of a spectrogram obtained from a test machine.

## DETAILED DESCRIPTION

The present disclosure relates to a method and a device for non-invasive condition monitoring of machines.

Current conditional monitoring methods and devices are often expensive, unsafe, delicate, requires precise alignment, requires highly skilled operators to perform, requires exposing the internal parts of the machine in order to install the monitoring device and, may be unreliable in dusty and dirty environments.

Monitoring the condition of existing machines requires some level of knowledge of the machine details and functional principles, such as where are the critical moving parts located, how can they be accessed, where can foreign sensors be installed safely, how to safely install the extra cables required by wired sensors, etc. As a consequence, different machines end up being monitored by different sets of sensors, placed in different numbers in order to monitor the different types of machine parts.

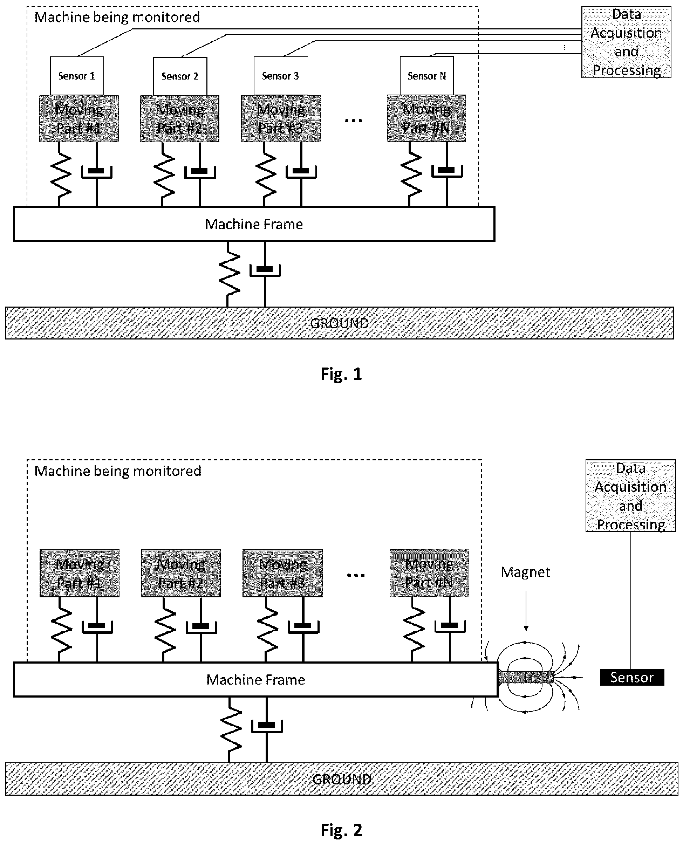

Figure 1 is a schematic illustration of the conventional method for condition monitoring of a machine with several internal moving parts. Conventionally, each moving part is monitored by a sensor or set of sensors placed in contact or even inside the part being monitored. This is an invasive solution which requires foreign sensors and wires to be added to the machine, which is not always possible or safe. Furthermore, a prior knowledge of the moving parts location, nature of the motion and nature of the moving part itself is required to install appropriate sensors in the appropriate positions in order to extract useful information.

As such, there is a need for a cheaper, simpler and non-invasive method for condition monitoring of machines that can be applied more universally, i.e., regardless of the nature of the machine and its internal parts.

The present disclosure relates to a method and a device for non-invasive monitoring of machine that is cheaper, simpler and does not require installing wires on/in the machine, or opening up the machine to expose the internal moving parts. Therefore, this method can be used to monitor any machine with internal moving parts, regardless of the nature of the machine.

In an embodiment, the method and device of the present disclosure include the use of a magnet placed on the machine frame. This magnet is solidary with the frame and creates a magnetic field with a magnitude that decays in space with the distance from the magnet. A magnet placed in a position $\vec{r_0}$, generates a magnetic field $\vec{H}(\vec{r} - \vec{r_0})$ that will change with respect to the placement of the magnet and the position in space considered.

In an embodiment, the method and device of the present disclosure include the use of a magnetic field sensor placed in the vicinity of the magnet, without contact and at a distance which is generally of the order from 0.1 cm to 10 cm, but can be further away, for example 1 cm - 1 m or 1 m - 10 m. This distance is preferably large enough for the magnetic field created by the magnet in the position occupied by the magnetic field sensor to fall within the dynamic range of the magnetic field sensor. If this condition is met, the magnetic field sensor will operate as a transducer which will convert the magnetic field in the position occupied by the sensor, $\vec{r_s}$, into a voltage which can be read and digitized by an appropriate electronics circuit. The transduction of magnetic field into voltage is determined by the sensitivity of the magnetic field sensor, $dV/dH$, which depends on the nature of the magnetic field sensor.

As shown in Fig. 2, any mechanical motion of any moving part of the machine that is mechanically coupled to the frame of the machine is transmitted to such frame that acts as a mechanical waveguide collecting mechanical energy from all different sources. Such motion in the frame results in a motion of the magnet, which is attached, for instance, to the tool frame. As a result, the position of the magnet changes with time $\vec{r_0} = \vec{r_0}(t)$ and so does the magnetic field in the fixed location where the magnet is placed $\vec{H}(\vec{r_s}, t) = \vec{H}(\vec{r_a} - \vec{r_0}(t))$. As a result, a displacement of the tool frame $\Delta\vec{r}$ generates a change of the magnetic field in the location of the magnetic field sensor which is given by $\Delta\vec{r}\,\dfrac{d\vec{H}}{d\vec{r}}(\vec{r_s})$ which in turn is converted to a change in the output voltage of the magnetic field sensor as a result of the intrinsic sensitivity of the sensor: $\Delta V = \Delta\vec{r}\,\dfrac{d\vec{H}}{d\vec{r}}(\vec{r_s})\dfrac{dV}{d\vec{H}}$.

The magnetic field sensor and the magnetic field gradient may be arranged such that the magnetic field gradient at the position of installation of the magnetic field sensor is large enough to generate a voltage variation across the sensor that is above the noise level of the electronics circuit used to monitor said voltage for displacements of the frame in the nanometer range.

The magnetic field sensor and the electronics circuit used to monitor the magnetic field sensor output may operate over a large frequency range (DC-10 MHz), allowing the motion of the frame to be monitored across a large range of time scales.

Due to the rapidly decreasing intensity of the magnetic field across space, the magnetic field sensor selectively may detect the motion of the frame at the point of contact or installation of the magnet. The magnet may form part of the machine to be monitored or, alternatively, may be permanently or detachably mounted onto the machine at a contact point. The mechanical motion in neighbouring machines will have negligible disturbance as compared with the displacement signal generated at the tool where the device is installed.

In an embodiment, the device comprises a data acquisition apparatus capable of acquiring and digitizing the data collected by the magnetic field sensor. The acquiring and digitizing the data may be at very fast rates (up to 10Msps) with a noise level comparable to the intrinsic noise of the magnetic field sensor.

In an embodiment, the device comprises a data analysis software capable of analyzing the data collected, namely by producing a dynamic spectrograph that can be used to characterize different machine part's operational modes.

In an embodiment, operating in the time domain, the data acquisition apparatus together with the data analysis software will generate an output which will depend on the motion of the different moving parts in the machine.

In an embodiment, as an example, moving parts in the machine with periodic mechanical motions with different characteristic frequencies can be identified as different Fourier components along the time trace. Additionally, parts operating at similar frequencies will generate different time traces that depend on the magnitude of the movements, relative phase difference between them, distance between the parts and the permanent magnet and type of mechanical coupling between these parts and the machine's exterior frame.

In an embodiment, the device comprises a data processing software which correlates the data collected with critical failures (reactive maintenance needs) as well as with the aging process of different moving parts in the machine for the purpose of predictive maintenance.

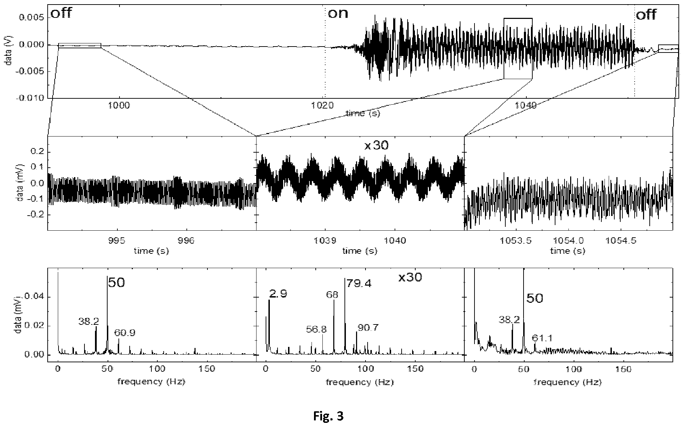

**Figure 3** shows an example of a time-domain signal obtained from a test machine using the magnetic field sensor according to an embodiment of the disclosure during three time periods (all machinery off, main machine part on and pump off, main machine part off and pump on).

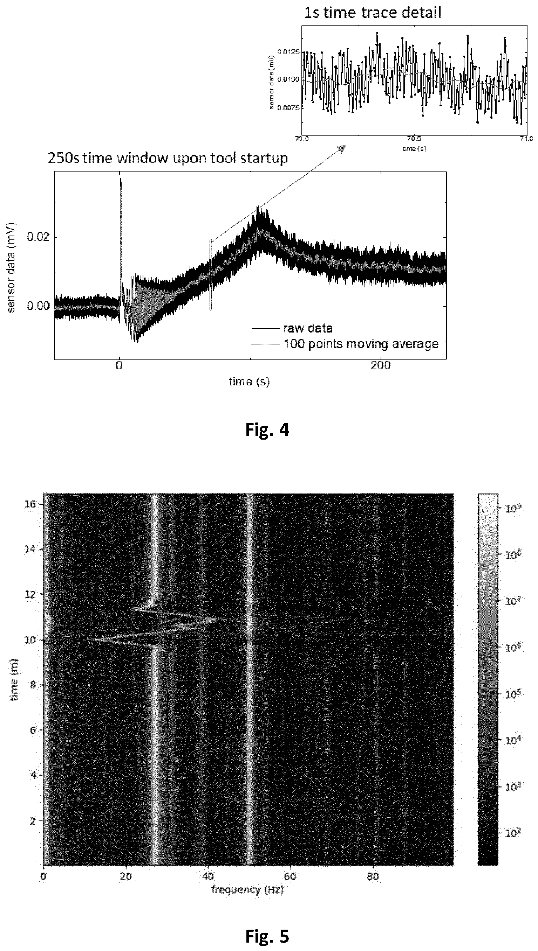

**Figure 4** shows an example of a time-domain signal obtained from a test machine using the magnetic field sensor according to an embodiment of the disclosure during machine start up, with zoomed in excerpts.

**Figure 5** is an example of a spectrogram obtained from a test machine for a duration of 16 minutes.

The disclosure should not be seen in any way restricted to the embodiments described and a person with ordinary skill in the art will foresee many possibilities to modifications thereof.

The above described embodiments are combinable.

## Claims

1. A method for non-invasive vibration-based condition monitoring of a machine placed on a physical frame of reference, using a time-domain broadband magnetoresistive sensor having a sensor transfer function of electric resistance versus magnetic field intensity, said machine comprising an attached magnet or a magnetic part;
comprising the steps of:

   placing the magnetic sensor on said physical frame of reference at a distance from the machine and at a predetermined distance from the magnet or magnetic part, such that the magnetoresistive sensor is operating in a dynamic part of the sensor transfer function in respect of the magnetic field produced by the magnet or a magnetic part; and
   capturing a time-domain magnetic field signal transduced by the sensor;
   using an electronic data processor to process the captured signal to obtain a vibration-based indicator of the machine's condition.

2. The method for non-invasive condition monitoring of a machine according to the previous claim wherein the broadband magnetoresistive sensor has a broadband response that includes 0 Hz or a DC component, in particular the broadband magnetoresistive sensor has a broadband response that includes 0 Hz to 1 KHz, or 0 Hz to 100 KHz, or 0 Hz to 1 MHz, or 0 Hz to 1 GHz.

3. The method for non-invasive condition monitoring of a machine according to any of the previous claims comprising the preceding step of attaching the magnet on an exterior surface of the machine.

4. The method for non-invasive condition monitoring according to any of the claims 1-2 where the magnet has been previously attached to an internal part of the machine.

5. The method for non-invasive condition monitoring of a machine according to the previous claim for monitoring a specific part of said machine, wherein the internal part of the machine is the specific part to be monitored.

6. The method for non-invasive condition monitoring of a machine according to any of the previous claims wherein the magnetoresistive sensor is operating in a linear part of the sensor transfer function in respect of the magnetic field produced by the magnet or a magnetic part; wherein the magnetoresistive sensor is: a magnetic tunnel junction, MTJ, sensor; a tunnel magnetoresistance, TMR, sensor; a giant magnetoresistance, GMR, sensor; or an anisotropic magnetoresistive, AMR, sensor.

7. The method for non-invasive condition monitoring of a machine according to any of the previous claims wherein the predetermined distance and the MTJ sensor are arranged such that the MTJ sensor is being operated within a linear response portion of the MTJ sensor input-output function.

8. The method for non-invasive condition monitoring of a machine according to any of the previous claims wherein the physical frame of reference is fixed relative to the ground.

9. The method for non-invasive condition monitoring of a machine according to the previous claim where the magnetic sensor is placed on a vibration-dampening or mechanically-decoupled stand which is placed on said physical frame of reference.

10. A system for non-invasive vibration-based condition monitoring of a machine placed on a physical frame of reference, said machine comprising an attached magnet or a magnetic part, the system comprising:

a time-domain wideband magnetoresistive sensor having a sensor transfer function of electric resistance versus magnetic field intensity, said machine comprising an attached magnet or a magnetic part, for placing on said physical frame of reference at a distance from the machine and at a reference distance from the magnet or magnetic part, wherein the magnetoresistive sensor is operating in a dynamic part of the sensor transfer function in respect of the magnetic field produced by the magnet or a magnetic part; and an electronic data processor configured for:

capturing a time-domain magnetic field signal transduced by the sensor; and processing the captured signal to obtain a vibration-based indicator of the machine's condition.

11. The system for non-invasive condition monitoring of a machine according to the previous claim wherein the wideband comprises 0 Hz or a DC component, in particular the broadband magnetoresistive sensor has a broadband response that includes 0 Hz to 1 KHz, or 0 Hz to 100 KHz, or 0 Hz to 1 MHz, or 0 Hz to 1 GHz.

12. System according to any of the claims 10-11 wherein the magnetoresistive sensor is: a magnetic tunnel junction, MTJ, sensor; a tunnel magnetoresistance, TMR, sensor; a giant magnetoresistance, GMR, sensor; or an anisotropic magnetoresistive, AMR, sensor.

13. The system for non-invasive condition monitoring of a machine according to any of the claims 10-12 wherein the electronic data processor is configured for processing the captured signal which is obtained when the MTJ sensor operates within a linear response portion of the MTJ sensor input-output function.

14. The system for non-invasive condition monitoring of a machine according to any of the claims 10-13 wherein the magnet is a compound magnet comprising an assembly of a plurality of magnets arranged for increasing the gradient of the produced magnetic field.

15. Use of a time-domain wideband magnetoresistive sensor having a sensor transfer function of electric resistance versus magnetic field intensity, for non-invasive vibration-based condition monitoring of a machine placed on a physical frame of reference, said machine comprising an attached magnet or a magnetic part, said use comprising:

placing the magnetic sensor on said physical frame of reference at a distance from the machine and at a predetermined distance from the magnet or magnetic part, such that the magnetoresistive sensor is operating in a dynamic part of the sensor transfer function in respect of the magnetic field produced by the magnet or a magnetic part; and capturing a time-domain magnetic field signal transduced by the sensor;

using an electronic data processor to process the captured signal to obtain a vibration-based indicator of the machine's condition.

**Fig. 1**

**Fig. 2**

Fig. 3

Fig. 4

Fig. 5

Europäisches
Patentamt

European
Patent Office

Office européen
des brevets

# EUROPEAN SEARCH REPORT

Application Number

EP 20 19 0156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/233660 A1 (BOSCH GMBH ROBERT [DE]) 12 December 2019 (2019-12-12) * page 6, line 11 - line 17; figure 1 * * page 8, line 3 - page 9, line 5 * ----- | 1-15 | INV. G01H1/00 G01H11/02 G01M15/12 G01H3/08 |
| X A | US 2012/059604 A1 (SHEU GEENG-JEN [TW] ET AL) 8 March 2012 (2012-03-08) * paragraphs [0001], [0023] - [0025], [0027] - [0028]; figures 1,4,5 * ----- | 1-3,10, 11,14,15 4-9,12, 13 | |
| X | DE 20 2016 003492 U1 (WERHAHN & NAUEN SE & CO OHG [DE]) 22 June 2016 (2016-06-22) * paragraphs [0002], [0007], [0010], [0013], [0026] - [0028], [0030], [0031]; figure 1 * ----- | 1-15 | |
| X | GB 2 338 848 A (CSI TECHNOLOGY INC [US]) 29 December 1999 (1999-12-29) * page 1, line 3 - line 7; figures 4,6,9 * * page 11, line 27 - line 35 * ----- | 1-15 | |
| X | GB 2 343 253 A (CSI TECHNOLOGY INC [US]) 3 May 2000 (2000-05-03) * page 1, line 3 - line 5; figure 1 * * page 11, line 5 - line 32 * ----- | 1-15 | TECHNICAL FIELDS SEARCHED (IPC) G01H G01M H02K |

The present search report has been drawn up for all claims

| Place of search | Date of completion of the search | Examiner |
|---|---|---|
| The Hague | 25 January 2021 | Haenssler, Thedda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 0156

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2021

| Patent document cited in search report | | Publication date | Patent family member(s) | | Publication date |
|---|---|---|---|---|---|
| WO 2019233660 | A1 | 12-12-2019 | DE 102018208882 A1<br>WO 2019233660 A1 | | 16-01-2020<br>12-12-2019 |
| US 2012059604 | A1 | 08-03-2012 | TW 201211516 A<br>US 2012059604 A1 | | 16-03-2012<br>08-03-2012 |
| DE 202016003492 | U1 | 22-06-2016 | NONE | | |
| GB 2338848 | A | 29-12-1999 | GB 2338848 A<br>US 6138078 A | | 29-12-1999<br>24-10-2000 |
| GB 2343253 | A | 03-05-2000 | GB 2343253 A<br>US 6078874 A | | 03-05-2000<br>20-06-2000 |

EPO FORM P0459

For more details about this annex : see Official Journal of the European Patent Office, No. 12/82

**EP 3 904 844 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3273203 A1
- US 2019219421 A1
- US 6208133 B1